# EUROPÄISCHE PATENTSCHRIFT

(11) **EP 0 454 099 B1**
(45) Veröffentlichungstag und Bekanntmachung des Hinweises auf die Patenterteilung: **27.10.1993**
(21) Anmeldenummer: 91106619.9
(22) Anmeldetag: 24.04.1991
(51) Int. Cl.: A23L 1/32, A23L 1/015

(54) **Verfahren zur Entfernung von Cholesterin aus Eigelb**
Process for separating cholesterol from egg yolk
Procédé de séparation du cholestérol à partir de jaune d'oeuf

(30) Priorität: 26.04.1990 DE 4013367
(43) Veröffentlichungstag der Anmeldung: 30.10.1991
(73) Patentinhaber: SKW Trostberg Aktiengesellschaft, 83308 Trostberg (DE)
(72) Erfinder: Cully, Jan, Dr., W-8268 Garching/Alz (DE); Vollbrecht, Heinz-Rüdiger, Dr., W-8226 Altenmarkt (DE)
(74) Vertreter: Huber, Bernhard, Dipl.-Chem.

(56) Entgegenhaltungen:
- EP-A- 0 318 326
- EP-A- 0 326 469
- EP-A- 0 350 379

## Beschreibung

Die Erfindung betrifft ein mehrstufiges Verfahren zur Entfernung von Cholesterin aus Eigelb.

Cholesterin und Cholesterinester, im folgenden beide als Cholesterin bezeichnet, sind lipophile Substanzen, die in zahlreichen wichtigen Lebensmitteln tierischen Ursprungs wie z.B. Eigelb, Fleisch, tierischen Fetten usw. vorkommen.

Erhöhte Cholesterinwerte im Blutserum des Menschen stellen bekanntermaßen einen erhöhten Risikofaktor für Arteriosklerose bzw. einer koronaren Herzkrankheit dar.

Durch eine Reduzierung der Cholesterinzufuhr ist es in den meisten pathologischen Fällen möglich, die normalen Cholesterinwerte im Blutserum wieder zu erreichen. Aus diesem Grund zielen die Bestrebungen der Lebensmittelindustrie im wesentlichen darauf ab, eine deutliche Reduzierung des Cholesterins in fettreichen Lebensmitteln tierischen Ursprungs vorzunehmen.

Ein wesentliches Problem ist hierbei, die sensorischen und ernährungsphysiologischen Eigenschaften der Lebensmittel weitgehend zu erhalten.

Es sind entsprechend dem Stand der Technik zwar schon eine Reihe von Verfahren zur Isolierung von Cholesterin bekannt geworden, doch eignen sich diese Methoden wegen chemischer Veränderungen wichtiger Bestandteile des Ausgangsmaterials (wie z.B. Proteine, Triglyceride usw.) nicht zur Reduzierung des Cholesteringehaltes in Lebensmitteln.

Ein relativ schonendes Verfahren, welches erst in jüngster Zeit bekannt geworden ist, bedient sich für die Entfernung des Cholesterins der CO₂-Hochdruckextraktion (vgl. V. Krukonis, Supercritical Fluid Processing, International Symposium on Supercritical Fluids, Nice, 1988).

Dieses Verfahren zeichnet sich war durch die physiologische Unbedenklichkeit des Extraktionsmittels (CO₂) aus, doch ist das Arbeiten bei hohem Druck technisch ziemlich aufwendig. Außerdem läßt sich nach diesem Verfahren Cholesterin bei schonenden Bedingungen nicht selektiv entfernen, weil auch Triglyceride mitextrahiert werden. Eine Verbesserung der Selektivität durch Temperaturerhöhung ist zwar grundsätzlich möglich, doch wirkt sich diese negativ auf die Beladung des CO₂ mit Cholesterin und auf die Qualität des erhaltenen Produktes aus.

Ein weiteres bekanntes Verfahren zur Entfernung von Cholesterinderivaten stellt die Komplexierung dieser Substanzen mit β-Cyclodextrin dar.

So wird beispielsweise gemäß der EP-A 0 326 469 Eigelbpulver nach dessen Homogenisierung mit Wasser 5 Stunden lang mit β-Cyclodextrin bei 40°C gerührt und der erhaltene Komplex durch Zentrifugation abgetrennt. Auf diese Weise lassen sich die Cholesteringehalte aber nur auf maximal 74 % der Ausgangswerte reduzieren.

Gemäß dem Verfahren der nicht vorveröffentlichten deutschen Patentanmeldung P 39 28 258.9 wird ausschließlich das Eigelbplasma, welches aus Eigelb mit Hilfe eines emulsionsbrechenden Mittels (Wasser) nach Abzentrifugieren der LDL-Granulafraktion gewonnen wurde, mit β-Cyclodextrin versetzt. Anschließend wird das so behandelte Eigelbplasma nach Abtrennung des β-Cyclodextrins wieder mit der LDL-Granulafraktion vereinigt.

Die Trennungen des Eigelbplasmas von der LDL-Granulafraktion und vom β-Cyclodextrin-Cholesterin-Komplex bereiten jedoch in manchen Fällen Schwierigkeiten.

Der Erfindung liegt daher die Aufgabe zugrunde, ein Verfahren zur Entfernung des Cholesterins aus Eigelb zu entwickeln, welches die genannten Nachteile des Standes der Technik nicht aufweist, und mit geringem technischen Aufwand und unter schonenden Bedingungen eine weitgehend selektive Reduzierung dieser Stoffe ermöglicht.

Diese Aufgabe wurde erfindungsgemäß gelöst durch ein Verfahren, das dadurch gekennzeichnet ist, daß man
1. durch Zugabe einer wäßrigen Lösung von Ammoniumcarbonat oder NaCl ein verdünntes Eigelbgemisch herstellt,
2. das verdünnte Eigelbgemisch mit einem festen Absorbens oder Komplexierungsmittel vermischt bis das Cholesterin absorbiert, bzw. komplexiert ist und danach
3. das mit Cholesterin beladene feste Absorbens oder den Cholesterin-Komplex vom Eigelbgemisch abtrennt und
4. anschließend Ammoniumcarbonat durch Erhitzen bei 40 bis 90°C bzw. NaCl durch Ultrafiltration oder/und Elektrodialyse und gegebenenfalls Wasser wieder entfernt.

Es hat sich überraschenderweise gezeigt, daß man erfindungsgemäß Eigelbprodukte mit niedrigem Gesamtcholesteringehalt und guten sensorischen Eigenschaften erhält.

Im Rahmen der Erfindung werden mit "Cholesterin" sowohl Cholesterin selbst als auch Cholesterinester bezeichnet. Beim Verfahren der Erfindung wird in der ersten Stufe durch Zugabe einer wäßrigen Lösung von Ammoniumcarbonat oder NaCl ein verdünntes Eigelbgemisch hergestellt, wobei durch den Zusatz von Ammoniumcarbonat oder NaCl ein Brechen der Emulsion und die Bildung einer LDL-Granulafraktion verhindert wird.

Die Menge an Ammoniumcarbonat-Lösung kann in weiten Grenzen variiert werden. Als besonders vorteilhaft hat es sich erwiesen, den Zusatz an Ammoniumcarbonat so zu wählen, daß es in einer Konzentration von 0,5 bis 2,5 Gew.-%, bezogen auf das Gesamtgewicht des verdünnten Eigelbgemisches, vorliegt. Die Ammoniumcarbonat-Lösung kann vor dem Zusatz zum Eigelb oder in situ durch getrennte Zugabe von Wasser und Ammoniumcarbonat hergestellt werden.

Bezogen auf das Ausgangsgewicht des Eigelbes sollte das Ammoniumcarbonat vorzugsweise in einer Menge von 0,3 bis 20 Gew.-%, besonders bevorzugt von 1 bis 5 Gew.-%, zugesetzt werden.

Ammoniumcarbonat erfaßt im Rahmen der Erfindung NH₄HCO₃ und (NH₄)₂CO₃.

Wird in Stufe 1 des erfindungsgemäßen Verfahrens eine NaCl-Lösung zugesetzt, so gilt im Prinzip das oben zu Ammoniumcarbonat-Lösung ausgeführte in gleicher Weise. Mit der NaCl-Lösung wird vorzugsweise soviel NaCl zugeführt, daß sich eine NaCl-Konzentration von 2 bis 10 Gew.-%, bezogen auf das Gesamtgewicht des verdünnten Eigelbgemisches, ergibt. Besonders bevorzugt ist eine NaCl-Konzentration von 4 bis 6 Gew.-%.

Der Wasserzusatz im Rahmen der Verdünnung des Eigelbes mit der wäßrigen Lösung soll vorzugsweise 10 bis 200 Gew.-%, besonders bevorzugt 50 bis 100 Gew.-%, bezogen auf das Ausgangsgewicht des Eigelbes, betragen.

In der zweiten Stufe des Verfahrens erfolgt dann die Entfernung des Cholesterins aus dem Eigelbgemisch durch Adsorption an einem geeigneten Feststoff oder durch Komplexierung mit Hilfe eines entsprechenden Komplexierungsmittels.

Als Adsorptionsmittel können die üblichen, unpolaren Stoffe wie z.B. Aktivkohle, Reverse-Phase-Kieselgel verwendet werden.

Als besonders vorteilhaft hat sich die Verwendung von Komplexierungsmittel, wie z.B. β-Cyclodextrin erwiesen, welches eine besonders selektive Abtrennung des Cholesterins ermöglicht.

Die Menge des Adsorptionsmittels bzw. Komplexierungsmittels kann in weiten Grenzen variiert werden, doch werden vorzugsweise 3 bis 40 Gew.-% Absorbens bzw. Komplexierungsmittels, bezogen auf die Trockenmasse des Eigelbes, eingesetzt.

Bei dieser Beladung des Absorbens bzw. Komplexierung, die nach bekannten Methoden, wie z.B. durch einfaches Mischen oder Rühren erfolgen kann, werden je nach Art und Menge an eingesetztem Absorbens bzw. Komplexierungsmittel etwa 80 bis 95 % des Cholesterins entfernt, während die übrigen Eigelbbestandteile weitgehend in der flüssigen Phase verbleiben.

Die Stufe 2 kann bei Zimmertemperatur durchgeführt werden, vorzugsweise wird jedoch mit einer auf 0 bis 10°C herabgesetzten Temperatur gearbeitet.

In der dritten Stufe des erfindungsgemäßen Verfahrens wird das mit Cholesterin beladene Absorbens bzw. der Cholesterin-Komplex vom flüssigen Eigelbgemisch abgetrennt, wobei die in der Technik üblichen Verfahren und Methoden zur Trennung von Feststoffen und Flüssigkeiten anwendbar sind. Wegen der raschen und vollständigen Trennung wird erfindungsgemäß die Zentrifugation bevorzugt. Andere Trennverfahren, wie z.B. die Filtration, sind ebenfalls geeignet.

Im allgemeinen kann das Absorbens bzw. Komplexierungsmittel nach dessen Rückgewinnung wieder verwendet werden.

Das in Stufe 3 von Cholesterin befreite Eigelbgemisch kann direkt zu Eigelbprodukten weiterverarbeitet werden. Es empfiehlt sich jedoch aus Gründen der geschmacklichen Qualität, das Ammoniumcarbonat oder NaCl wieder zu entfernen. In der vierten Stufe des Verfahrens werden daher das NaCl oder/und Ammoniumcarbonat, und gegebenenfalls Wasser, aus dem Eigelbgemisch wieder entfernt. Die Entfernung kann bei Ammoniumcarbonat durch Erhitzen auf Temperaturen von 40 bis 90°C, vorzugsweise 55 bis 70°C, erfolgen.

NaCl wird vorzugsweise durch Ultrafiltration oder/und Elektrodialyse entfernt. Falls erwünscht, kann auch gleichzeitig oder getrennt das Wasser ganz oder teilweise entfernt werden, beispielsweise durch einfache Sprühtrocknung oder Vakuumverdampfung. Auf diese Weise erhält man je nach Trocknungsgrad ein Flüssigei oder ein Eigelbpulver mit einem um ca. 80 bis 95 % reduzierten Gesamtcholesteringehalt. Aufgrund dieser guten Reduzierung des Cholesteringehaltes verbunden mit den weiteren Vorteilen wie geringer technischer Aufwand und gute sensorische Qualität der erhaltenen Eigelbprodukte eignet sich das erfindungsgemäße Verfahren besonders gut für die technische Durchführung.

Die nachfolgenden Beispiele sollen die Erfindung näher erläutern,

### Beispiel 1

2 kg Eigelb mit einem Gesamtcholesteringehalt von 1,2 % wurden mit 2 kg destilliertem Wasser verdünnt. Danach wurden 50 g Ammoniumcarbonat (NH₄)₂CO₃ zugegeben.

Anschließend wurde das verdünnte Eigelbgemisch mit 280 g β-Cyclodextrin versetzt und 30 Minuten lang bei 10°C gerührt. Danach wurde das beladene β-Cyclodextrin durch Zentrifugation vom Eigelbgemisch abgetrennt.

Das verdünnte Eigelbgemisch wurde schließlich einer kurzzeitigen Vakuumbehandlung bei 50°C unterworfen, wobei das Ammoniumcarbonat und das zugegebene Wasser entfernt wurden. Als Produkt wurde ein Eigelb mit einem Gesamtcholesteringehalt von 0,18 % erhalten, was einer 85 %igen Reduzierung gegenüber unbehandeltem Eigelb entspricht.

### Beispiel 2

2 kg Eigelb mit einem Gesamtcholesteringehalt von 1,2 % wurden mit 1 kg destilliertem Wasser verdünnt und mit 75 g Ammoniumcarbonat NH₄H CO₃ versetzt.

Danach wurden dem erhaltenen Eigelbgemisch 280 g β-Cyclodextrin zugegeben, 60 Minuten bei 15°C gerührt und anschließend zentrifugiert.

Auf diese Weise wurde ein verdünntes Eigelb-Ammoniumcarbonat-Gemisch mit einem Gesamtcholesteringehalt von 0,14 % erhalten. Dieses wurde durch Sprühtrocknung bei 75°C von Ammoniumcarbonat und Wasser befreit und zu einem Eigelbpulver mit einem Gesamtcholesteringehalt von 0,4 % verarbeitet, was einer 83 %igen Reduzierung an Cholesterin gegenüber einem unbehandelten Eigelbpulver entspricht.

### Beispiel 3

2 kg Eigelb mit einem Cholesteringehalt von 1,2 % wurden in der Weise vorbehandelt, daß man das Eigelb mit 2 kg einer wäßrigen 10 Gew.-%igen NaCl-Lösung vermischt.

Anschließend wurde das Eigelb-Salzgemisch mit 280 g β-Cyclodextrin versetzt und 30 Minuten lang bei 5°C gerührt. Danach wurde das beladene β-Cyclodextrin durch Zentrifugation von der Eigelbphase abgetrennt.

Die verdünnte Eigelbphase wurde daraufhin einer Cross-Flow-Ultrafiltration unterworfen, wobei der Feuchtigkeitsgehalt auf den ursprünglichen Wert eingestellt und der NaCl-Gehalt in etwa halbiert wurde.

Schließlich wurde durch einen Elektrodialyseschritt der NaCl-Gehalt auf einen Wert von ca. 0,3 % gesenkt.

Als Produkt wurde ein Eigelb mit einem Gesamtcholesteringehalt von 0,12 % erhalten, was einer 90 %igen Reduzierung gegenüber unbehandeltem Eigelb entspricht.

## Patentansprüche

1. Verfahren zur Entfernung von Cholesterin aus Eigelb,
**dadurch gekennzeichnet,**
daß man
1. durch Zugabe einer wäßrigen Lösung von Ammoniumcarbonat oder NaCl ein verdünntes Eigelbgemisch herstellt,
2. das verdünnte Eigelbgemisch mit einem festen Absorbens oder Komplexierungsmittel vermischt, bis das Cholesterin absorbiert bzw. komplexiert ist und danach
3. das mit Cholesterin beladene feste Absorbens oder den Cholesterin-Komplex vom Eigelbgemisch abtrennt und
4. anschließend Ammoniumcarbonat durch Erhitzen bei 40 bis 90°C bzw. NaCl durch Ultrafiltration oder/und Elektrodialyse und gegebenenfalls Wasser wieder entfernt.

2. Verfahren nach Anspruch 1,
**dadurch gekennzeichnet,**
daß man in Stufe 1 wäßrige Ammoniumcarbonatlösung zugibt, bis die Ammoniumcarbonat-Konzentration 0,5 bis 2,5 Gew.-% bezogen auf das Gesamtgewicht des verdünnten Eigelbgemisches, beträgt.

3. Verfahren nach Anspruch 1,
**dadurch gekennzeichnet,**
daß man 0,3 bis 20 Gew.-% Ammoniumcarbonat, bezogen auf das Ausgangsgewicht des Eigelbes, zugibt.

4. Verfahren nach Anspruch 3,
**dadurch gekennzeichnet,**
daß man 1 bis 5 Gew.-% Ammoniumcarbonat zusetzt.

5. Verfahren nach Anspruch 1,
**dadurch gekennzeichnet,**
daß man in Stufe 1 wäßrige NaCl-Lösung zugibt, bis die NaCl-Konzentration 2 bis 10 Gew.-%, bezogen auf das Gesamtgewicht des verdünnten Eigelbgemisches, beträgt.

6. Verfahren nach Anspruch 5,
**dadurch gekennzeichnet,**
daß man eine NaCl-Konzentration von 4 bis 6 Gew.-%, bezogen auf das Gesamtgewicht des verdünnten Eigelbgemisches, einstellt.

7. Verfahren nach einem der vorhergehenden Ansprüche,
**dadurch gekennzeichnet,**
daß man in Stufe 1 Wasser in einer Menge von 10 bis 200 Gew.-%, bezogen auf das Ausgangsgewicht des Eigelbes, zusetzt.

8. Verfahren nach Anspruch 7,
**dadurch gekennzeichnet,**
daß man Wasser in einer Menge von 50 bis 100 Gew.-%, bezogen auf das Ausgangsgewicht des Eigelbes, zusetzt.

9. Verfahren nach einem der vorhergehenden Ansprüche,
**dadurch gekennzeichnet,**
daß man in Stufe 2 als Komplexierungsmittel β-Cyclodextrin verwendet.

10. Verfahren nach einem der vorhergehenden Ansprüche,
**dadurch gekennzeichnet,**
daß man das feste Absorbens, bzw. Komplexierungsmittel in einer Menge von 3 bis 40 Gew.-%, bezogen auf die Trockenmasse des Eigelbes, einsetzt.

11. Verfahren nach Anspruch 1,
**dadurch gekennzeichnet,**
daß man in Stufe 2 eine Temperatur von 0 bis 10°C aufrechterhält.

12. Verfahren nach einem der vorhergehenden Ansprüche,
**dadurch gekennzeichnet,**
daß man in Stufe 3 das mit Cholesterin beladene Absorbens, bzw. den Cholesterinkomplex vom verdünnten Eigelbgemisch abzentrifugiert.

13. Verfahren nach Anspruch 1,
**dadurch gekennzeichnet,**
daß man Ammoniumcarbonat, gegebenenfalls zusammen mit Wasser, durch Erhitzen auf 55-70°C entfernt.

14. Verfahren nach Anspruch 13,
**dadurch gekennzeichnet,**
daß man im Vakuum erhitzt.

## Claims

1. Process for the removal of cholesterol from egg yolk, characterised in that one
1. produces a diluted egg yolk mixture by addition of an aqueous solution of ammonium carbonate or NaCl,
2. mixes the diluted egg yolk mixture with a solid adsorbent or complexing agent until the cholesterol is adsorbed or complexed and thereafter
3. separates off the solid adsorbent loaded with cholesterol or the cholesterol complex from the egg yolk mixture and
4. subsequently again removes ammonium carbonate by heating at 40 to 90°C or NaCl by ultrafiltration and/or electrodialysis and possibly water.

2. Process according to claim 1, characterised in that, in step 1, one adds aqueous ammonium carbonate solution up to the ammonium carbonate concentration of 0.5 to 2.5 wt.%, referred to the total weight of the diluted egg yolk mixture.

3. Process according to claim 1, characterised in that one adds 0.3 to 20 wt.% of ammonium carbonate, referred to the starting weight of the egg yolk.

4. Process according to claim 3, characterised in that one adds 1 to 5 wt.% of ammonium carbonate.

5. Process according to claim 1, characterised in that, in step 1, one adds aqueous NaCl solution up to the NaCl concentration of 2 to 10 wt.%, referred to the total weight of the diluted egg yolk mixture.

6. Process according to claim 5, characterised in that one adjusts an NaCl concentration of 4 to 6 wt.%, referred to the total weight of the diluted egg yolk mixture.

7. Process according to one of the preceding claims, characterised in that, in step 1, one adds water in an amount of 10 to 200 wt.%, referred to the starting weight of the egg yolk.

8. Process according to claim 7, characterised in that one adds water in an amount of from 50 to 100 wt.%, referred to the starting weight of the egg yolk.

9. Process according to one of the preceding claims, characterised in that one uses β-cyclodextrin as complexing agent in step 2.

10. Process according to one of the preceding claims, characterised in that one uses the solid adsorbent or the complexing agent in an amount of 3 to 40 wt.%, referred to the dry weight of the egg yolk.

11. Process according to claim 1, characterised in that one maintains a temperature of 0 to 10°C in step 2.

12. Process according to one of the preceding claims, characterised in that, in step 3, one centrifuges off the adsorbent loaded with cholesterol or the cholesterol complex from the diluted egg yolk mixture.

13. Process according to claim 1, characterised in that one removes ammonium carbonate, possibly together with water, by heating to 55 - 70°C.

14. Process according to claim 13, characterised in that one heats in a vacuum.

## Revendications

1. Procédé pour retirer le cholestérol du jaune d'oeuf, caractérisé en ce que
1. on prépare un mélange de jaune d'oeuf dilué par addition d'une solution aqueuse de carbonate d'ammonium ou de NaCl,
2. on mélange le mélange de jaune d'oeuf dilué avec un absorbant solide ou un complexant jusqu'à ce que le cholestérol soit absorbé ou complexé puis
3. on sépare du mélange de jaune d'oeuf l'absorbant solide chargé de cholestérol ou le complexe de cholestérol et
4. on retire ensuite le carbonate d'ammonium par chauffage entre 40 et 90°C ou NaCl par ultrafiltration et/ou électrodialyse et éventuellement l'eau.

2. Procédé selon la revendication 1, caractérisé en ce que, dans l'étape 1, on ajoute une solution aqueuse de carbonate d'ammonium jusqu'à ce que la concentration du carbonate d'ammonium soit de 0,5 à 2,5% en poids par rapport au poids total du mélange de jaune d'oeuf dilué.

3. Procédé selon la revendication 1, caractérisé en ce que l'on ajoute 0,3 à 20% en poids de carbonate d'ammonium par rapport au poids initial de jaune d'oeuf.

4. Procédé selon la revendication 3, caractérisé en ce que l'on ajoute 1 à 5% en poids de carbonate d'ammonium.

5. Procédé selon la revendication 1, caractérisé en ce que, dans l'étape 1, on ajoute une solution de NaCl jusqu'à ce que la concentration de NaCl soit de 2 à 10% en poids par rapport au poids total de mélange de jaune d'oeuf dilué.

6. Procédé selon la revendication 5, caractérisé en ce que l'on établit une concentration de NaCl de 4 à 6% en poids par rapport au poids total du mélange de jaune d'oeuf dilué.

7. Procédé selon l'une des revendications précédentes, caractérisé en ce que, dans l'étape 1, on ajoute de l'eau en une quantité de 10 à 200% en poids par rapport au poids initial de jaune d'oeuf.

8. Procédé selon la revendication 7, caractérisé en ce que l'on ajoute de l'eau en une quantité de 50 à 100% en poids par rapport au poids initial de jaune d'oeuf.

9. Procédé selon l'une des revendications précédentes, caractérisé en ce que, dans l'étape 2, on utilise la β-cyclodextrine comme complexant.

10. Procédé selon l'une des revendications précédentes, caractérisé en ce que l'on utilise l'absorbant solide ou le complexant en une quantité de 3 à 40% en poids par rapport à la masse sèche de jaune d'oeuf.

11. Procédé selon la revendication 1, caractérisé en ce que, dans l'étape 2, on maintient une température de 0 à 10°C.

12. Procédé selon l'une des revendications précédentes, caractérisé en ce que, dans l'étape 3, on sépare par centrifugation l'absorbant chargé de cholestérol ou le complexe de cholestérol du mélange de jaune d'oeuf dilué.

13. Procédé selon la revendication 1, caractéris.é en ce que l'on élimine le carbonate d'ammonium, éventuellement en même temps que l'eau, par chauffage à 55-70°C.

14. Procédé selon la revendication 13, caractérisé en ce que l'on chauffe sous vide.
